# FASCICULE DE BREVET EUROPEEN

(11) **EP 1 117 300 B1**
(45) Date de publication et mention de la délivrance du brevet: **17.03.2004**
(21) Numéro de dépôt: 99934804.8
(22) Date de dépôt: 28.07.1999
(51) Int. Cl.: A21C 1/14

(54) **PETRIN A CUVE REFROIDIE OU CHAUFFANTE**
KNETER MIT EINEM GEKÜHLTEN ODER BEHEIZTEN BEHÄLTER
KNEADING TROUGH WITH COOLED OR HEATING VAT

(43) Date de publication de la demande: 25.07.2001
(73) Titulaire: VMI, 85600 Montaigu (FR)
(72) Inventeur: NUSSBAUM, Jean-Louis, F-44470 Sainte Luce sur Loire (FR)
(74) Mandataire: Keib, Gérard
(86) Numéro de dépôt international: PCT/FR1999/001869
(87) Numéro de publication internationale: WO 2001/006857

(56) Documents cités:
- EP-A- 0 609 610
- DE-A- 3 415 113
- US-A- 1 666 285
- US-A- 2 274 220
- US-A- 4 275 568
- PATENT ABSTRACTS OF JAPAN vol. 005, no. 106 (C-062), 10 juillet 1981 (1981-07-10) & JP 56 045751 A (BIBUN CORP), 25 avril 1981 (1981-04-25)

## Description

L'invention concerne un système de transfert de fluide caloporteur pour un mélangeur de produits alimentaires, un mélangeur comprenant un tel système de transfert, et une installation comprenant au moins un tel mélangeur.

On connaît déjà des mélangeurs alimentaires à cuve entraînée, notamment dans le domaine des pétrins de boulangerie.

La rotation de la cuve permet une meilleure régularité et reproductivité des caractéristiques du mélange.

On connaît des dispositifs de refroidissement de produits alimentaires pour cuve fixe.

Le document FR 2 764 366 décrit une installation de refroidissement du contenu d'une enceinte à l'aide d'un liquide cryogénique injecté au sein de la masse de matière à mélanger à une pression supérieure à 3 bars.

Le document FR 2 665 824 décrit un procédé de stockage et de conservation de lait dans une cuve équipée d'un système de refroidissement combiné à un dispositif d'agitation pour le maintien à une température de conservation du lait souhaité.

On connaît également des mélangeurs alimentaires comprenant un contenant entraîné en rotation et refroidi par mise en contact avec un fluide caloporteur.

Le document EP 430 460 décrit un appareil pour congeler des aliments comprenant un tambour rotatif descendant et remontant successivement d'un récipient contenant un fluide cryogénique.

Le document WO 97/11 327 décrit un appareil permettant un refroidissement très rapide de boissons dans des récipients en rotation sur lesquels on atomise, avec un diffuseur, de l'eau de refroidissement.

Ces dispositifs font intervenir des bacs de stockage ou de réception de liquide de refroidissement, d'où des difficultés d'encombrement notamment pour des mélangeurs de grandes tailles, et de contacts non souhaités avec le produit alimentaire pour des mélangeurs à contenant ouvert.

Concernant plus particulièrement les pétrins de boulangerie, il est difficile de réguler avec précision et à un coût limité la température du mélange lors de la rotation. D'autant que pour une cuve en rotation, il faut pouvoir amener et évacuer un fluide caloporteur sans que les moyens d'amenée et d'évacuation ne gênent la rotation.

Pour les pétrins, les principales causes d'élévation de température de la pâte alimentaire à base d'eau et de farine sont le frottement de l'outil dans la pâte, la poussée de la pâte par l'outil contre le fond de cuve, la poussée de la pâte par l'outil contre la paroi de la cuve, la poussée de la pâte par l'outil contre le pivot de cuve. En outre, dans beaucoup de boulangeries ou de pâtisseries, la farine est stockée dans des silos extérieurs exposés au soleil, ce qui requiert un refroidissement d'autant plus important.

Une solution connue consiste à réguler la température de l'eau de la pâte. Pour obtenir une pâte fraîche, il est d'usage d'utiliser une eau réfrigérée ou de la glace pilée. Une eau réfrigérée requiert l'utilisation d'un groupe de refroidissement, mais la température de l'eau ne peut descendre dans ce cas en dessous de 1° C à moins d'être légèrement salée. L'utilisation de glace pilée requiert une machine de production de grande capacité dans le cas de pétrins utilisés en batterie, ainsi que du personnel pour assurer l'approvisionnement. Une combinaison de l'eau et de la glace est parfois utilisée pour assurer la production. Mais une proportion eau-glace est à respecter pour que l'eau puisse entrer dans la farine et ensuite entraîner la fonte de la glace.

On peut également contrôler la température du local de la salle de pétrissage, mais ces salles de pétrissage sont généralement grandes et demandent beaucoup de frigories pour dissiper la température de la pâte et les calories évacuées par les différents moteurs.
Dans le cas d'installations destinées à chauffer le mélange de la cuve, certains pétrins utilisent des rampes à gaz permettant de chauffer la cuve, mais ces systèmes posent des difficultés d'exploitation compte tenu de normes de sécurité liées aux appareils à gaz.

On connaît par ailleurs, de manière générale, des dispositifs de raccord entre une alimentation en fluide, et un contenant rotatif, décrits par exemple dans les documents EP 609 610, WO 97/15763. Ces dispositifs ne sont toutefois pas spécifiquement conçus pour permettre l'amenée d'un fluide caloporteur jusqu'à un contenant et son évacuation coaxiale à travers une même pièce de raccord, et ce dans des conditions opératoires souhaitées pour le mélange concernées par l'invention, notamment une vitesse de rotation de la cuve de l'ordre de 5 à 30 tours/minute, et des débits de fluide de l'ordre de 1 à 20 m³/h typiquement voisins de 10 m³/h.

On connaît du document JP-56045751 un mélangeur à chaud et à froid agencé selon le préambule de la revendication 1. Le double tuyau d'alimentation et d'évacuation du fluide a également pour fonction d'entraîner le mélangeur en rotation.

L'invention vise à palier ces inconvénients de l'art antérieur et à proposer un mélangeur comprenant un système de circulation de fluide caloporteur permettant une bonne régulation thermique du mélange entraîné en rotation.

A cet effet, l'invention a pour objet un mélangeur alimentaire comprenant un système de transfert d'un fluide caloporteur tel qu'un pétrin de boulangerie, le mélangeur comprenant :
- un châssis,
- un contenant mobile en rotation autour d'un axe et comprenant une paroi interne, une paroi intermédiaire et une paroi externe,
- des moyens fixes d'amenée du fluide caloporteur au contenant comprenant une conduite d'arrivée,
- des moyens de raccord entre la conduite d'arrivée et le contenant mobile, les moyens de raccord étant aptes à maintenir l'étanchéité entre les moyens fixes d'amenée et le contenant,
- des moyens de passage pour la circulation du fluide transféré par les moyens de raccord, les moyens de passage comprenant un canal d'arrivée au contenant et un canal de départ de la cuve du fluide caloporteur, des moyens de passage permettant la circulation du fluide entre les parois interne et intermédiaire et d'autres moyens de passage permettant l'évacuation du fluide entre les parois intermédiaire et externe,
caractérisé en ce que les moyens de raccord comprennent une partie fixe fixée au châssis du mélangeur montée étanche sur les moyens d'amenée, et une partie coaxiale montée étanche et mobile en rotation par rapport à la partie fixe à l'aide de corps roulants, la partie mobile étant fixée au contenant mobile.

Le système de transfert comprend des moyens d'évacuation du fluide caloporteur montés étanches sur la partie fixe des moyens de raccord.

Selon un mode de réalisation, les moyens de raccord comprennent un premier conduit de transfert du fluide selon l'axe A, acheminant le fluide des moyens d'amenée aux moyens de passage.

Les moyens de raccord comprennent un second conduit de transfert du fluide, séparé du premier conduit de transfert par une paroi et coaxial avec le premier conduit de transfert, le second conduit de transfert collectant le fluide sortant des moyens de passage du fluide et le transférant vers les moyens d'évacuation.

Le premier conduit de transfert forme un canal cylindrique axial et le second conduit de transfert un canal annulaire, le canal cylindrique et le canal annulaire étant séparés par une paroi annulaire, le canal annulaire débouchant dans une chambre reliée latéralement par un orifice d'évacuation aux moyens d'évacuation.

En position de montage, la partie fixe se présente sous la forme d'un collecteur s'étendant verticalement comportant un canal cylindrique axial et un canal annulaire saillant de l'extrémité supérieure du collecteur, et la partie mobile sous la forme d'un manchon tournant s'étendant axialement relié par les corps roulant au collecteur et fixé sur la partie extrême inférieure du contenant.

Les moyens de raccord comprennent une bague d'appui prolongeant axialement et vers le bas le manchon tournant, et venant en contact avec un ressort de compression spiral coaxial.

Les moyens de raccord comprennent des moyens d'étanchéité entre le premier conduit de transfert, le second conduit de transfert, les moyens de passage du fluide, les moyens d'amenée du fluide et les moyens d'évacuation du fluide.

Le contenant est entraîné en rotation par des moyens d'entraînement du contenant, de type poulie ou engrenage, montés sur la partie extrême inférieure du contenant sur laquelle est également fixée la partie mobile des moyens de raccord et reliés à un arbre moteur d'entraînement monté sur le châssis, la cuve étant guidée en rotation par une couronne d'orientation, le positionnement du collecteur, de la couronne d'orientation, et du manchon tournant étant coaxial, l'axe étant celui de rotation de la cuve.

En outre le système de transfert comprend des premiers moyens de montage au châssis du mélangeur de la partie fixe des moyens de raccord, et des seconds moyens de montage de la partie mobile des moyens de raccord à la partie extrême inférieure du contenant.

Selon une réalisation, les moyens de passage forment une double enveloppe la paroi du contenant en contact avec le mélange formant la première enveloppe, la seconde enveloppe étant le cas échéant avec hélicoïde afin d'améliorer la circulation du fluide autour de la paroi du contenant.

Selon une variante, une troisième enveloppe d'isolation recouvre la seconde enveloppe afin de concentrer les échanges de chaleur entre le mélange et le fluide.

Selon une autre réalisation, les moyens de passage forment un tube calorigène présentant une surface de contact sensiblement plane contre la paroi du contenant, le tube étant enroulé, serré autour du contenant, de manière continue.

Par ailleurs, le mélangeur comprend des premiers moyens fixes de guidage, coopérant avec des seconds moyens mobiles de guidage fixés à la partie extrême inférieure du contenant.

Le fluide caloporteur est un fluide de refroidissement ou de réchauffement.

Le contenant est cylindrique.

La vitesse de rotation du contenant est de l'ordre de 5 à 30 tours/minute, le débit d'amenée du fluide caloporteur est de l'ordre de 1 à 20 m³/h.

Selon une réalisation, les moyens d'amenée et les moyens d'évacuation sont des tubulures rigides reliées à un dispositif de stockage du fluide caloporteur.

Selon un mode de réalisation, le contenant est solidaire du châssis du mélangeur.

Selon un autre mode de réalisation, le contenant est extractible du châssis du mélangeur, typiquement à l'aide d'un chariot de transport, un dispositif de raccordement assurant le raccord rapide des moyens d'amenée et des moyens d'évacuation avec les moyens de raccord.

Selon un deuxième aspect, l'invention concerne un mélangeur pour produit alimentaire comprenant un système de transfert tel que décrit précédemment, un contenant ouvert ou fermé, un châssis support des moyens de raccord, un dispositif d'entraînement en rotation du contenant, des moyens de mélange, des moyens de commande.

Le mélangeur tel que décrit précédemment est de type pétrin à cuve entraînée, le pétrin étant un pétrin à spirale, un pétrin à axe oblique, un pétrin à bras.

Selon un troisième aspect, l'invention concerne une installation de mélange comprenant au moins un mélangeur, l'installation étant utilisée pour un procédé en continu ou en discontinu, en ligne ou en carrousel.

D'autres objets et avantages de l'invention apparaîtront au cours de la description qui va être faite en référence aux figures annexées, dans lesquelles :
La figure 1 est une générale de côté d'un mélangeur comprenant un système de transfert de fluide caloporteur pour une cuve en rotation.

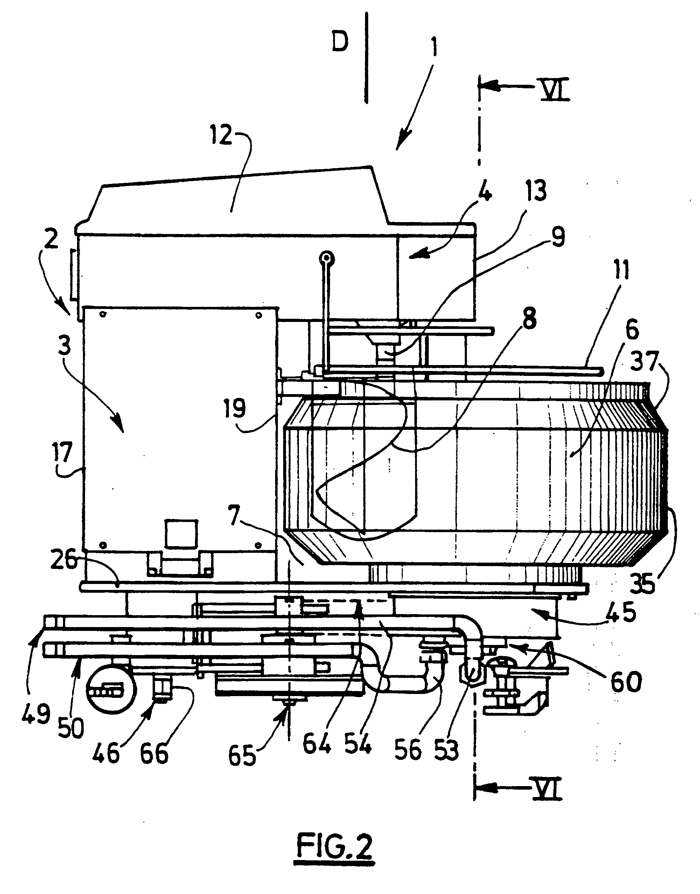

La figure 2 est une vue générale de côté analogue à la figure 1, le bâti inférieur du mélangeur étant retiré pour visualiser les moyens de raccord.

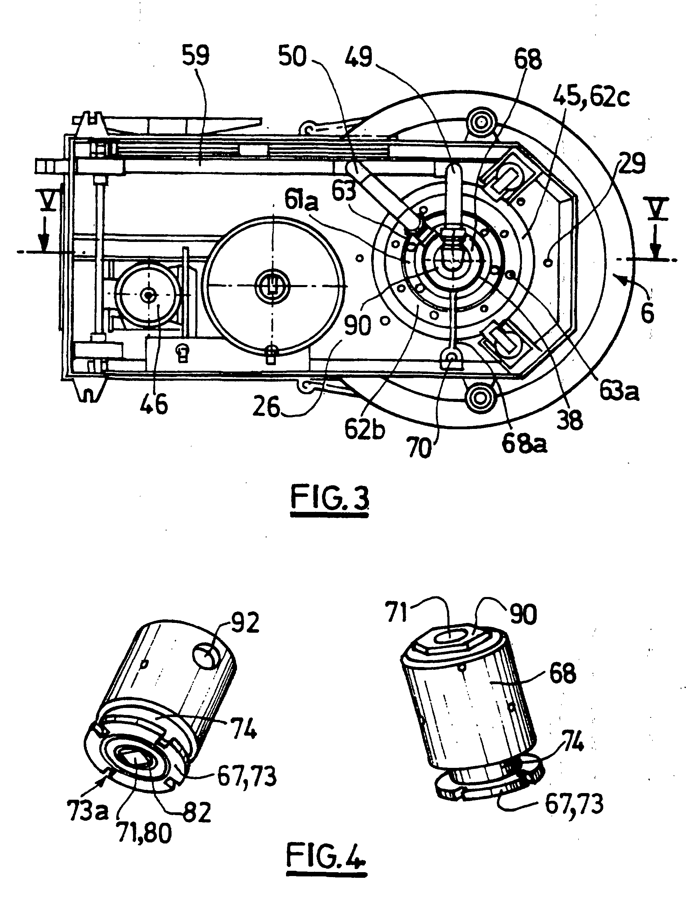

La figure 3 est une vue de dessous du mélangeur de la figure 2.
La figure 4 représente deux vues en perspective des moyens de raccord, avant montage sur le châssis du mélangeur.

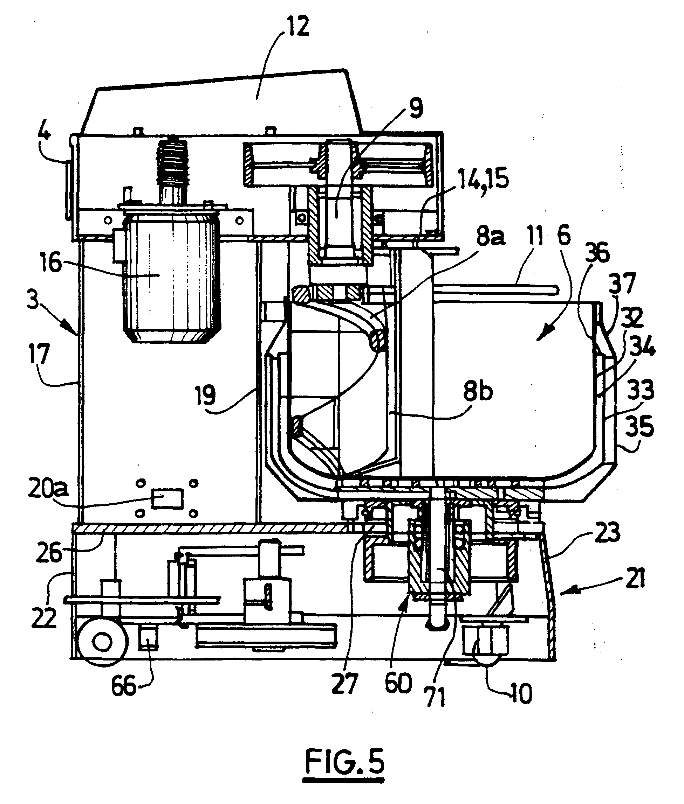

La figure 5 est une vue en coupe longitudinale selon la ligne V-V de la figure 2.

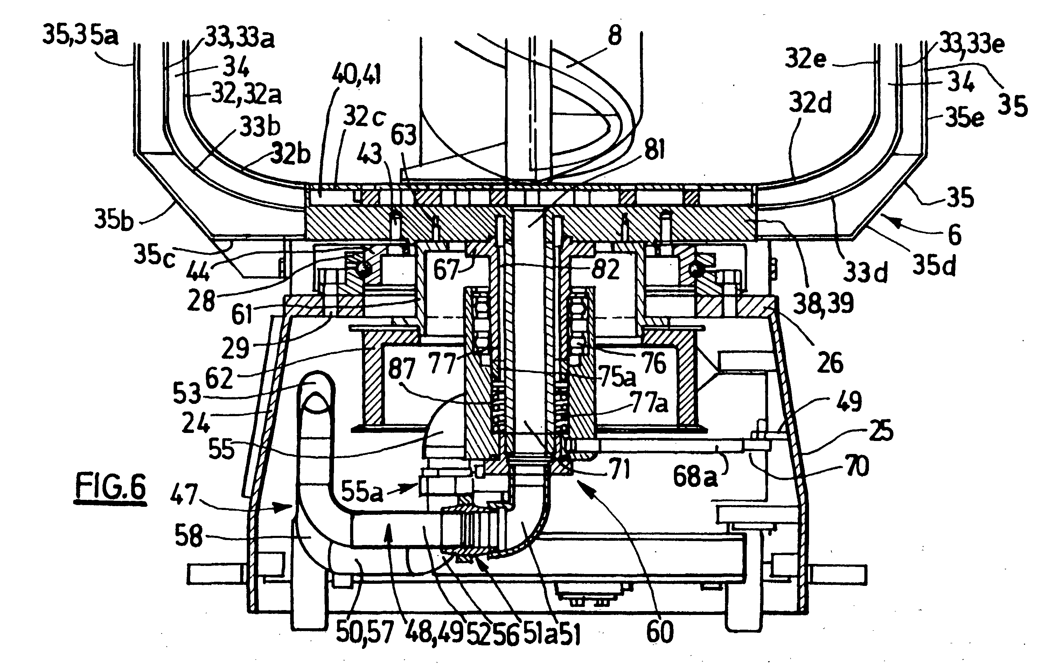

La figure 6 est une vue en coupe transversale de face selon la ligne VI-VI de la figure 2 du mélangeur.

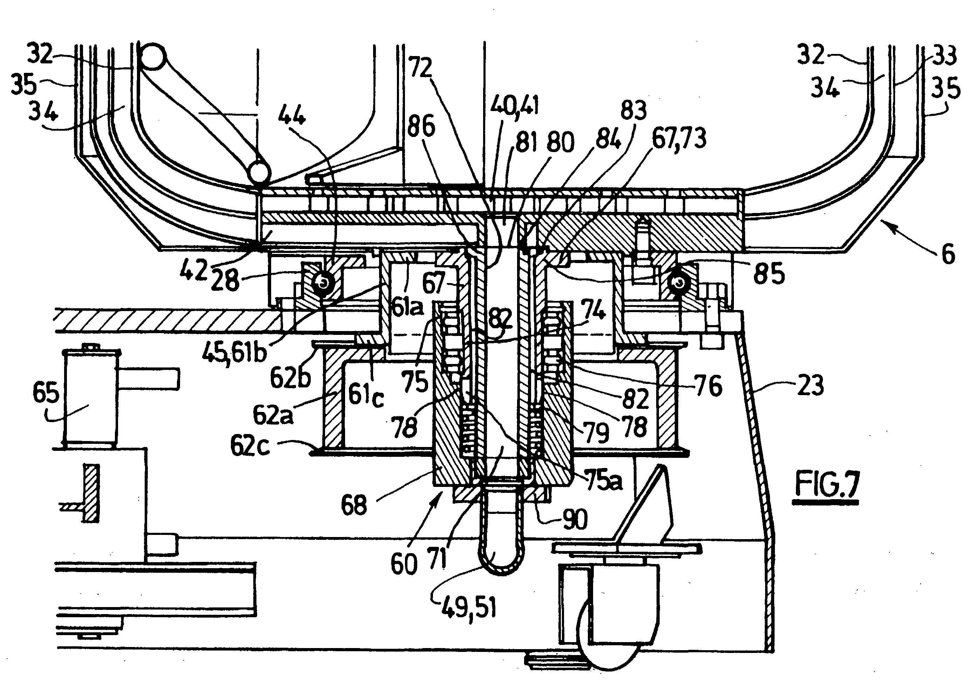

La figure 7 est une vue en agrandissement de la figure 5 au niveau de la zone de raccord.

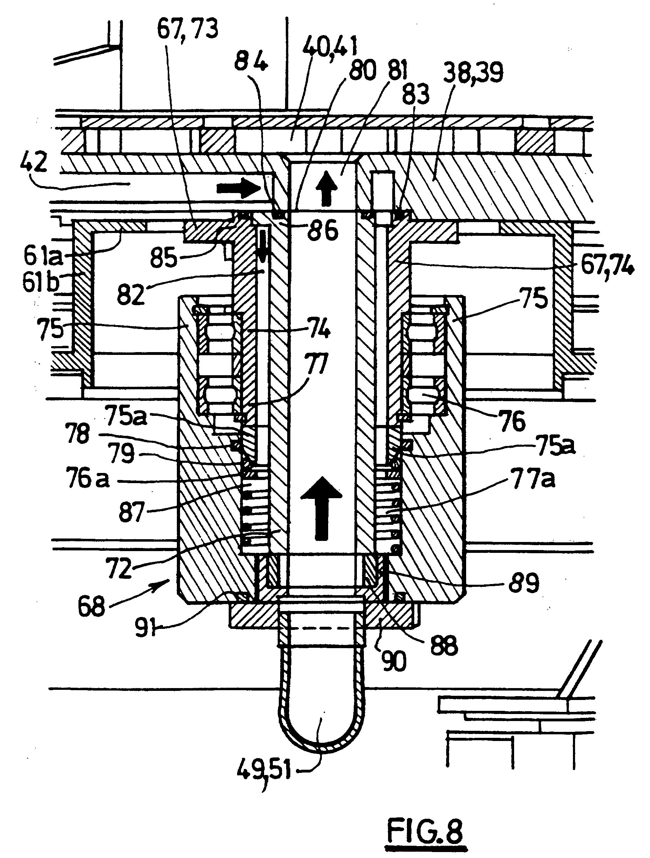

La figure 8 est une vue en agrandissement de la figure 6 au niveau de la zone de raccord entre la cuve rotative et les moyens d'amenée du fluide caloporteur.

Le dispositif de transfert de fluide caloporteur selon l'invention est destiné à un appareil tel qu'un mélangeur ou un batteur, notamment pour l'industrie alimentaire, par exemple dans le domaine de la boulangerie confiserie, pâtisserie, permettant de traiter différents matériaux pâteux ou liquides alimentaires, et d'obtenir un mélange optimal des constituants.

Le volume de produit traité peut être élevé grâce au dispositif décrit par la suite, par exemple de l'ordre de 50 à 700 litres.

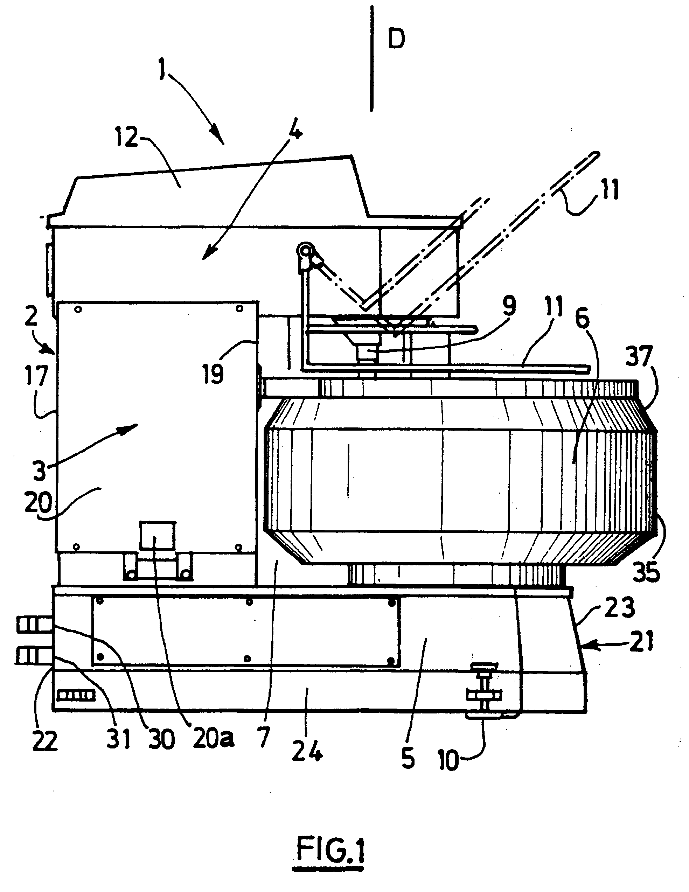

Les qualificatifs de haut et bas, supérieur et inférieur, correspondent à un appareil posé verticalement sur un support, les pieds de support en bas, tel que représenté en figure 1.

Les qualificatifs de avant et arrière correspondent à ce même appareil, l'avant de l'appareil étant du côté de la cuve, l'arrière de l'appareil étant du côté opposé. Le mélangeur 1 comprend un bâti 2 comportant un corps vertical 3, une partie supérieure transversale 4, une partie inférieure transversale 5.

Par la suite, on situe la position des différents éléments du mélangeur 1 en référence au corps vertical 3 du bâti 2.

Le corps vertical 3 s'étend selon une direction D verticale et est situé en position arrière de l'appareil.

Une cuve 6 est placée en position avant de l'appareil, en situation de montage de cette cuve 6.

Le côté gauche de l'appareil correspond à la partie gauche vue par un utilisateur placé du côté avant et regardant de face le corps vertical 3 du bâti 2.

Entre la partie supérieure transversale 4 et la partie inférieure transversale 5, existe un espace 7 destiné à recevoir la cuve 6 ouverte à sa partie supérieure dans cette réalisation. La cuve 6 contient les éléments mélangés à l'aide d'outils de mélange 8 appropriés tels que spirale(s) 8a ou fouet(s) ou autres formes, et un racleur 8b. Les outils de mélange 8 sont entraînés en rotation par un arbre moteur 9. Dans cette réalisation, l'arbre moteur 9 est vertical et monté sur la partie transversale supérieure 4 du bâti 2.

La partie supérieure transversale 4 est par exemple de forme sensiblement parallélepipédique, la partie inférieure transversale 5 comprend par exemple quatre pieds espacés 10 ou des roues.

La cuve 6 est une cuve de révolution montée sur la partie inférieure transversale 5. Le montage et la rotation de cette cuve 6 seront décrits précisément plus loin.

L'appareil comprend en outre une grille de protection 11 montée pivotante sur la partie transversale supérieure 4. Cette grille 11 a notamment pour fonction d'empêcher un accès non souhaité à l'intérieur de la cuve 6 lorsque l'appareil est en train de fonctionner.

Dans d'autres réalisations, au lieu d'une grille de protection, l'appareil comprend un couvercle plein pivotant ou non.

La partie supérieure transversale 4 du bâti 2 comprend :
- un capot 12 formant carter pour les organes de commande de l'arbre 9, notamment la motorisation, la transmission par courroie ou équivalent. En face avant du capot 12 se trouvent des moyens de commande 13 du fonctionnement de l'appareil ; selon une autre réalisation, les moyens de commande 13 peuvent être sur un pupitre sur le côté de la machine, ou sur un coffret séparé ;
- un arbre moteur 9 entraîneur en rotation sur lequel sont fixés les outils de mélange 8 ;
- un organe support 14 sous la forme d'une plaque support horizontale 15 comprenant un orifice circulaire pour le passage de l'arbre moteur 9 à travers cette plaque support 15.

L'arbre moteur 9 est relié à un dispositif de motorisation 16, soit en direct, soit par un palier de poulies intermédiaires.

Le corps vertical 3 comprend notamment quatre faces 17, 18, 19, 20, la face 20 présentant un orifice 20a pour l'alimentation électrique de l'armoire électrique.

Le châssis 21 de la partie inférieure transversale 5 forme un capot comprenant une face arrière 22, une face avant 23, une face latérale gauche 24, une face latérale droite 25, une face supérieure 26.

La face supérieure 26 ménage un orifice 27 destiné, lorsque la cuve est en position de montage, à recevoir des éléments du dispositif de transfert de fluide, comme cela sera décrit par la suite.

La face supérieure 26 forme une plaque de support pour des moyens de guidage en rotation 28, fixés sur la plaque support 26 à l'aide de vis de fixation 29.

La face arrière 22 du châssis 21 présente des orifices 30, 31 permettant le passage des tuyaux de circulation du fluide caloporteur décrits plus loin.

On décrit maintenant la structure et le fonctionnement du dispositif de transfert de fluide.

La cuve 6 est une cuve comprenant une première paroi 32, une deuxième paroi 33, les deux parois 32 et 33 délimitant un espace 34 de circulation du fluide caloporteur.

La cuve 6 comprend une troisième paroi 35 destinée à l'isolation thermique de la cuve. Les parois 32 et 33 sont reliées par un bord horizontal 36, les parois 32 et 35 sont reliées par un bord incliné 37.

Le schéma de circulation du fluide caloporteur est représenté par les flèches, mais peut être inversé en fonction du fluide.

Les parois 32, 33, 35 s'étendent circonférenciellement.

La première paroi 32 comprend une première portion 32a verticale, une deuxième portion 32b arrondie, une troisième portion 32c horizontale ou avec un cône central, une quatrième portion 32d courbe, et une cinquième portion verticale 32e.

La deuxième paroi 33 comprend une première portion verticale 33a, une deuxième portion courbée 33b, une troisième portion 33d, et une quatrième portion verticale 33e.

La troisième paroi 35 comprend une première portion verticale 35a, une deuxième portion inclinée 35b, une troisième portion horizontale 35c, une quatrième portion inclinée 35d, et une cinquième portion verticale 35e.

Le fond 38 de la cuve 6 comprend une partie pleine 39 s'étendant horizontalement, et une zone de circulation 40 de circulation du fluide caloporteur.

Cette zone 40 comprend des canaux d'arrivée 41 de fluide caloporteur à la cuve 6, et au moins un canal de sortie 42 de fluide caloporteur de la cuve 6.

Le fluide caloporteur n'est pas envoyé directement dans la cuve au contact des produits alimentaires.

La cuve 6, et plus précisément le fond 38 de la cuve 6 supporte à l'aide de vis de fixation 43 une couronne de guidage 44 apte à tourner avec les moyens de guidage 28 fixés à la plaque support 26 à l'aide de vis 29.

L'ensemble formé par les moyens de guidage 28 et la couronne de guidage 44, constitue une couronne d'orientation 45. La cuve 6, et plus précisément le fond 38 de cuve 6 est entraînée en rotation à l'aide d'un dispositif de type poulie ou engrenage lui-même entraîné en rotation par un dispositif de motorisation 46 décrit par la suite, situé dans le bas du mélangeur 1.

Le mélangeur 1 comprend en outre des moyens de conduite 47 du fluide caloporteur. Ces moyens de conduite 47 comprennent des moyens d'amenée 48 comportant une conduite d'arrivée 49, et des moyens d'évacuation comprenant une canalisation de sortie 50.

La canalisation d'arrivée 49 présente, en s'éloignant de la cuve 6, une première portion coudée 51, une deuxième portion rectiligne horizontale 52, une troisième portion coudée 53 se prolongeant par une quatrième portion horizontale 54.

La première portion 51 et la deuxième portion 52 sont reliées par un raccord annulaire amovible 51a.

La canalisation de sortie 50 comprend, en s'éloignant de la cuve 6, une première portion coudée 55, une seconde portion coudée 56, une troisième portion horizontale 57, une quatrième portion coudée 58 se prolongeant par une cinquième portion horizontale 59.

La première portion 55 et la deuxième portion 56 sont reliées par un raccord annulaire amovible 55a. Le démontage des raccords 51a et 55a permet d'insérer entre les portions 51 et 52, et les portions 55 et 56 respectivement les flexibles de rallonges dans une réalisation où la cuve est non pas fixée sur un châssis fixe, mais sur un chariot mobile.

Les moyens d'amenée 48 et les moyens d'évacuation 50 étant fixes, et la couronne d'orientation 45 étant mobile en rotation, le mélangeur 1 comprend des moyens de raccord 60.

La couronne d'orientation 45 est coaxiale avec la cuve 6. La cuve 6 dans cette réalisation supporte une pièce comportant une première partie 61 et une seconde partie 62 fixées entre elles.

La partie 61 est fixée au-dessus de la partie 62, et est fixée au fond 38 de la cuve 6 par des vis 63. La partie 61 comprend de haut en bas une portion annulaire transversale 61a, une portion annulaire axiale 61b dirigée selon l'axe de rotation et une portion annulaire transversale 61c à l'axe de rotation. Les parties 61 et 62 sont reliées par des vis 63a.

La deuxième partie 62 comprend une portion annulaire axiale 62a, une portion transversale annulaire supérieure 62b et une portion annulaire transversale inférieure 62c.

La couronne d'orientation 45 est reliée au dispositif de motorisation 46 par une courroie 64 en appui sur la portion 62a, entre les portions 62b et 62c. La courroie 64 relie la courroie d'orientation 45 à un arbre d'entraînement 65 actionné en rotation par courroie ou pignons et courroies à un arbre moteur 66. Selon une variante, au lieu de courroies d'entraînement est de type motoréducteur ou pignons et courroies.

La structure des moyens de guidage 28 et de la couronne de guidage 44, ainsi que la vitesse de rotation et le poids de la cuve, sont tels que la cuve est maintenue sans endommager le dispositif de transfert de fluide.

Les moyens de raccord 60 comprennent une partie mobile en rotation, à savoir un manchon tournant 67, et une partie fixe, à savoir un collecteur 68.

Le collecteur 68 est fixé par une tige de fixation horizontale 68a, à la face latérale droite 25 du châssis 21, plus précisément à un repli 69, et à l'aide d'une vis de fixation 70.

Le collecteur 68, en position de montage, s'étend verticalement. Le collecteur 68 comprend un canal axial 71, destiné à la circulation du fluide caloporteur en arrivée, du bas vers le haut dans le prolongement de la portion 55 de la canalisation d'arrivée 49.

Le canal 71 est délimité par une paroi cylindrique 72. L'extrémité 80 du canal 71 débouche dans un orifice 81 axial du fond de cuve 38 qui communique avec les canaux d'arrivée 41 de la cuve 6.

Le manchon tournant 67 est fixé au fond 38 de la cuve 6. Ce manchon 67 comprend une portion supérieure transversale 73 fixée en position de montage au niveau de logements 73a au fond de cuve 38, et une portion radiale 74 verticale.

Le manchon tournant 67, et plus précisément la portion 74, est séparé de la paroi cylindrique 72 par un espace formant un canal de circulation annulaire 82 du fluide caloporteur en sortie de la cuve 6.

Le canal annulaire 82 prolonge les canaux de circulation 42 et le fluide circule du haut vers le bas du canal 82. L'étanchéité entre la cuve 6, le canal cylindrique 71, et le canal annulaire 82 est assurée par un premier joint annulaire 83, et un second joint annulaire 84.

Le premier joint 83 est disposé à l'extrémité supérieure 85 de la portion 74 de la paroi 72 et le second joint 84 à l'extrémité supérieure 86 de la paroi 72.

La portion 74 est mobile en rotation par rapport à la partie extrême 75 fixe du collecteur 68 à l'aide de corps tournants 76.

La partie extrême 77 de la portion inférieure 74 se prolonge vers le bas par une bague d'appui 75a logée contre une rondelle d'appui 76a.

La bague d'appui 75a vient en appui contre la partie extrême supérieure du ressort 77a.

Le fluide caloporteur en sortie de cuve emprunte le canal annulaire 82 puis débouche dans une chambre annulaire 87 qui loge le ressort de compression 77a. La chambre annulaire 87 communique avec la portion coudée 55 de la canalisation de sortie 50.

Le collecteur 68 comprend en outre, un joint statique 78, et un joint dynamique 79, pour assurer l'étanchéité entre la chambre 87 et la cavité logeant les corps tournants 76.

En partie basse, le collecteur 68 comprend une bague de soutien 88 et une entretoise 89 destinées au soutien de la paroi cylindrique 72.

Une bague de serrage 90 permet le raccordement, avec un joint d'étanchéité 91, de la canalisation d'arrivée 49 sur le collecteur 68. Un orifice de sortie latéral 92 relie la chambre 87 à la canalisation de sortie 50.

En position de fonctionnement, la cuve étant en rotation, le mélangeur présente trois ensembles :
- un ensemble fixe comprenant, le bâti 2 du mélangeur, les moyens de guidage 28, le collecteur 68, la canalisation d'arrivée 49 et la canalisation de sortie 50 ;
- un ensemble mobile en rotation comprenant la cuve 6; la couronne de guidage 44 de la couronne d'orientation 45, le manchon tournant 67, la pièce 61, 62 ;
- un ensemble mobile en rotation comprenant l'outil 8 et les moyens de transmission.

Le fluide arrive par la canalisation d'arrivée 49 dans le canal cylindrique 71, débouche dans l'orifice 81 puis circule dans la double enveloppe de la cuve 6. Le fluide est évacué en sortie de cuve 6 par le canal annulaire 82 jusque dans la chambre 87 puis via l'orifice 92 vers la canalisation de sortie 50. L'étanchéité est assurée par les joints 83 et 84, au niveau de la partie extrême inférieure de la cuve 6.

Le montage du dispositif de transfert se fait typiquement de la manière suivante :
- positionnement des éléments, notamment de la cuve 6 et fixation de la couronne d'orientation 45 au fond 38 de la cuve 6 ;
- fixation du manchon tournant 67 au fond de cuve 6 ;
- raccordement des canalisations d'arrivée et d'évacuation au collecteur 68 ;
- fixation définitive des éléments.

Ce montage peut être adapté selon la forme des pièces utilisées.

Grâce au mélangeur précédemment décrit, la circulation du fluide dans la cuve facilite les échanges thermiques et limite les pertes d'énergie.

Le fond 38 de la cuve 6 représente une surface importante possible pour l'échange de frigories ou de calories, et permet un chauffage ou un refroidissement direct de la cuve 6.
Dans le cas d'une cuve 6 à fond 38 plat, ce fond 38 peut comprendre une canalisation en spirale.

Dans le cas d'une cuve avec un dôme central, ou cône, non décrite ici en détail, un cheminement du fluide est prévu pour le canaliser dans le dôme, pour bénéficier du maximum d'échanges thermiques.

En outre, lorsque la cuve comporte une hélicoïde, cette hélicoïde peut ne pas être en contact direct avec le bol de travail, le jeu entre l'hélicoïde et la paroi verticale 32a étant d'environ 1 mm, afin d'éviter d'avoir des traces visibles de soudure sur la surface interne au contact des aliments.
Par ailleurs, la couronne d'orientation permet le passage du raccord tournant dans le cas d'une cuve fixe comme d'une cuve amovible.

Cette couronne d'orientation peut rendre la cuve 6 directement solidaire du bâti dans le cas d'un pétrin fixe, ou solidaire du chariot de cuve dans le cas d'un pétrin à cuve amovible. Son grand diamètre donne une assise solide à la cuve 6.

Concernant la motorisation de la cuve par rapport à un pétrin classique avec crapaudine et poulie réceptrice, une poulie spécifique a été insérée dans la couronne d'orientation : des courroies crantées permettent de mieux résister aux efforts supplémentaires liés à une pâte froide.

On décrit maintenant d'autres modes de réalisation de l'invention.

Selon un second mode de réalisation, le manchon tournant 67 est situé à l'extérieur, et non à l'intérieur, comme dans le premier mode de réalisation, du collecteur 68.

La structure de la partie extrême inférieure 77 du manchon 67 et de la partie extrême supérieure 75 du collecteur 68 sont adaptées en conséquence, ainsi que la position des corps tournants 76.

On a décrit un mélangeur de type pétrin à spirale. Selon d'autres modes de réalisation, le pétrin est de type à axe oblique, l'axe de rotation des outils de mélange étant oblique par rapport à l'axe vertical de rotation de la cuve. Le pétrin peut être à bras (l'axe de rotation des outils est perpendiculaire à l'axe vertical de la cuve).

La grille de protection est adaptée au type de pétrin, par exemple il s'agit d'une grille circulaire rotative, ou d'une grille relevable.

Le pétrin peut également être du type à tête relevable, le couvercle ou la grille étant intégrés à la partie transversale supérieure du châssis.

Les outils de mélange sont bien sûr adaptés au type de pétrissage souhaité, par exemple spirale, palette, fouet, etc.

Selon un autre mode de réalisation, l'axe de rotation de la cuve est incliné voire horizontal lorsque la cuve est une cuve fermée.

Selon un autre mode de réalisation, le pétrin est de type à cuve amovible. La cuve est montée sur un chariot de transport.

La partie avant du châssis présente une ouverture permettant le dégagement de la cuve montée sur le châssis mobile du chariot de support de la cuve. Le chariot comprend une plaque de support appartenant au bâti du chariot, sur laquelle sont montés les moyens de raccord et la couronne d'orientation, et le chariot comprend des pieds de support de cuve dont l'encombrement ne gêne pas le positionnement axial des moyens de raccord.
En position de fonctionnement, le système de transfert du mélangeur fonctionne comme dans le premier mode de réalisation.

Pour raccorder les moyens d'amenée et les moyens d'évacuation du fluide caloporteur avec les moyens de raccord, on procède au montage manuel ou automatique de flexibles intermédiaires entre la canalisation d'arrivée et l'orifice axial d'amenée du collecteur, et entre la canalisation de sortie et l'orifice latéral de sortie du collecteur. La forme et la position des canalisations d'arrivée et de sortie est adaptée au positionnement du chariot en position de montage, et en position de retrait par rapport au pétrin.

Selon un autre mode de réalisation, la cuve fait partie d'un mélangeur avec un dispositif d'élévation et de transport. Par exemple, le chariot support de la cuve rotative est soulevé selon un axe vertical, la cuve étant maintenant maintenue fixée lors du soulèvement. En fin de course verticale de chariot, le chariot support est basculé autour d'un axe horizontal afin de déverser le contenu de la cuve. La cuve est bien entendu maintenue par des moyens de fixation appropriés sur le bâti du chariot mobile.

Ces pétrins à chariot mobile sont généralement inclus dans une installation comprenant au moins un pétrin. Ces pétrins fonctionnent dans des installations en continu comprenant par exemple outre l'élévateur retoumeur, une rampe d'élévation de trémie, des peseuses. Dans l'installation avec élévateur, le pétrin peut être à axe oblique ou à axe vertical.

Dans un autre mode de réalisation avec cuve supportée par un chariot mobile, le mélangeur peut être de grande dimension, comportant une position haute dans laquelle les outils de mélange sont situés au-dessus et dégagés de la cuve, et une position basse dans laquelle les outils de mélange sont dans la cuve en position de mélange. On peut aussi régler la capacité de production de l'installation en utilisant plusieurs cuves. Une cuve peut être retirée, maintenue en contact avec le système de transfert de fluide pour conserver une température souhaitée, une autre cuve étant amenée en position de mélange.

Selon une autre réalisation, le mélangeur appartient à une installation de type carrousel en continu, la production pouvant aller de quelques kilogrammes jusqu'à plusieurs tonnes par heure.

On a décrit jusqu'à présent des mélangeurs de type alimentaire, notamment de type pétrin. Le système de transfert est tel qu'il permet une régulation thermique d'un mélange selon les conditions opératoires mentionnées précédemment, notamment une vitesse de rotation de la cuve de l'ordre de 12 à 14 tours/min pour un pétrin oblique, de 10 à 30 tours/min pour un pétrin spirale, et un débit du fluide caloporteur de l'ordre de 10 m³/h.

Ces mélangeurs sont utilisables pour de très nombreuses applications dans le domaine alimentaire, qui requièrent un système de régulation thermique du mélange, notamment des sauces, des pâtes. On peut également envisager l'utilisation de ce mélangeur pour des produits nécessitant une régulation thermique dans d'autres domaines, notamment chimiques ou pharmaceutiques.

## Revendications

1. Mélangeur alimentaire comprenant un système de transfert, d'un fluid caloporteur tel qu'un pétrin de boulangerie, le mélangeur comprenant :
- un châssis (2),
- un contenant (6) mobile en rotation autour d'un axe et comprenant une paroi interne, une paroi intermédiaire et une paroi externe,
- des moyens fixes d'amenée (48) du fluide caloporteur au contenant (6) comprenant une conduite d'arrivée (49),
- des moyens de raccord (60) entre la conduite d'arrivée (49) et le contenant mobile (6), les moyens de raccord (60) étant aptes à maintenir l'étanchéité entre les moyens fixes d'amenée (48) et le contenant (6),
- des moyens de passage (34, 41, 42) pour la circulation du fluide transféré par les moyens de raccord, les moyens de passage (34, 41, 42) comprenant un canal d'arrivée au contenant et un canal de départ de la cuve du fluide caloporteur, les moyens de passage (34, 41) permettant la circulation du fluide entre les parois interne et intermédiaire et les moyens de passage (42) permettant l'évacuation du fluide entre les parois intermédiaire et externe,
**caractérisé en ce que** les moyens de raccord (60) comprennent une partie fixe (68) fixée au châssis du mélangeur montée étanche sur les moyens d'amenée (48), et une partie coaxiale (67) montée étanche et mobile en rotation par rapport à la partie fixe (68) à l'aide de corps roulants (76), la partie mobile étant fixée au contenant mobile (6).

2. Mélangeur selon la revendication 1, **caractérisé en ce qu'**il comprend des moyens d'évacuation (50) du fluide caloporteur montés étanches sur la partie fixe (68) des moyens de raccord (60).

3. Mélangeur selon la revendication 2, **caractérisé en ce que** les moyens de raccord (60) comprennent un premier conduit de transfert (71) du fluide selon l'axe A, acheminant le fluide des moyens d'amenée (48) aux moyens de passage (41).

4. Mélangeur selon la revendication 3, **caractérisé en ce que** les moyens de raccord (60) comprennent un second conduit (82) de transfert du fluide, séparé du premier conduit (71) de transfert par une paroi (74) et coaxial avec le premier conduit (71) de transfert, le second conduit (82) de transfert collectant le fluide sortant des moyens de passage (42) du fluide et le transférant vers les moyens d'évacuation (50).

5. Mélangeur selon la revendication 4, **caractérisé en ce que** le premier conduit (71) de transfert forme un canal cylindrique axial et le second conduit (82) de transfert un canal annulaire, le canal cylindrique et le canal annulaire étant séparés par une paroi annulaire, le canal annulaire (82) débouchant dans une chambre (87) reliée latéralement par un orifice d'évacuation (92) aux moyens d'évacuation (50).

6. Mélangeur selon la revendication 5, **caractérisé en ce que**, en position de montage, la partie fixe (68) se présente sous la forme d'un collecteur (68) s'étendant verticalement comportant un canal cylindrique axial et un canal annulaire saillant de l'extrémité supérieure du collecteur (68), et la partie mobile sous la forme d'un manchon tournant (67) s'étendant axialement relié par les corps roulants (76) au collecteur (68) et fixé sur la partie extrême inférieure (38) du contenant (6).

7. Mélangeur selon la revendication 6, **caractérisé en ce que** les moyens de raccord (60) comprennent une bague d'appui (75a) prolongeant axialement et vers le bas le manchon tournant (67), et venant en contact avec un ressort de compression spiral (77a) coaxial.

8. Mélangeur selon l'une quelconque des revendications 6 ou 7, **caractérisé en ce que** les moyens de raccord (60) comprennent des moyens d'étanchéité (83, 84, 78, 79, 91) entre le premier conduit de transfert (71), le second conduit (82) de transfert, les moyens de passage (40, 41) du fluide, les moyens d'amenée (48) du fluide et les moyens d'évacuation (50) du fluide.

9. Mélangeur selon l'une quelconque des revendications 2 à 8, **caractérisé en ce que** le contenant (6) est entraîné en rotation par des moyens d'entraînement (62) du contenant (6), de type poulie ou engrenage, montés sur la partie extrême inférieure (38) du contenant sur laquelle est également fixée la partie mobile (67) des moyens de raccord (60), et reliés à un arbre moteur (66) d'entraînement monté sur le châssis (2), la cuve (6) étant guidée en rotation par une couronne d'orientation 45, le positionnement du collecteur (68), de la couronne d'orientation (45), et du manchon tournant (67) étant coaxial, l'axe étant celui de rotation de la cuve (6).

10. Mélangeur selon l'une quelconque des revendications 2 à 9, **caractérisé en ce que** le systeme de transfert comprend des premiers moyens de montage (68a) au châssis (2) du mélangeur (1) de la partie fixe (68) des moyens de raccord (60), et des seconds moyens de montage de la partie mobile (67) des moyens de raccord (60) à la partie extrême inférieure (38) du contenant (6).

11. Mélangeur selon l'une quelconque des revendications 2 à 10, **caractérisé en ce que** les moyens de passage (34) forment une double enveloppe (32, 33), la paroi du contenant (6) en contact avec le mélange formant la première enveloppe (32), la seconde enveloppe (33) étant le cas échéant avec hélicoïde afin d'améliorer la circulation du fluide autour de la paroi du contenant.

12. Mélangeur selon la revendication 11, **caractérisé en ce qu'**une troisième enveloppe d'isolation recouvre la seconde enveloppe afin de concentrer les échanges de chaleur entre le mélange et le fluide.

13. Mélangeur selon l'une quelconque des revendications 2 à 12, **caractérisé en ce que** les moyens de passage (34) forment un tube calorigène présentant une surface de contact sensiblement plane contre la paroi du contenant, le tube étant enroulé, serré autour du contenant, de manière continue.

14. Mélangeur selon l'une quelconque des revendications 2 à 13, **caractérisé en ce qu'**il comprend des premiers moyens fixes de guidage (28), coopérant avec des seconds moyens mobiles (44) de guidage fixés à la partie extrême inférieure (38) du contenant.

15. Mélangeur selon l'une quelconque des revendications 2 à 14, **caractérisé en ce que** le fluide caloporteur est un fluide de refroidissement ou de réchauffement.

16. Mélangeur selon l'une quelconque des revendications 2 à 15 **caractérisé en ce que** le contenant (6) est cylindrique.

17. Mélangeur selon l'une quelconque des revendications 2 à 16, **caractérisé en ce que** la vitesse de rotation du contenant est de l'ordre de 5 à 25 tours/minute, le débit d'amenée du fluide caloporteur est de l'ordre de 8 à 12 m³/h.

18. Mélangeur selon l'une quelconque des revendications 2 à 17, **caractérisé en ce que** les moyens d'amenée et les moyens d'évacuation sont des tubulures rigides reliées à un dispositif de stockage du fluide caloporteur.

19. Mélangeur selon l'une quelconque des revendications 2 à 18, **caractérisé en ce que** le contenant est solidaire du châssis du mélangeur.

20. Mélangeur selon l'une quelconque des revendications 2 à 18, **caractérisé en ce que** le contenant est extractible du châssis du mélangeur, typiquement à l'aide d'un chariot de transport, un dispositif de raccordement assurant le raccord rapide des moyens d'amenée et des moyens d'évacuation avec les moyens de raccord.

21. Mélangeur selon l'une des revendications 1 à 20, **caractérisé en ce qu'**il est de type pétrin à cuve entraînée, le pétrin étant un pétrin spirale, un pétrin à axe oblique, un pétrin à bras.

22. Installation de mélange, **caractérisée en ce qu'**elle comprend au moins un mélangeur selon l'une des revendications 1 à 21, l'installation étant utilisée pour un procédé en continu ou en discontinu, en ligne ou en carrousel.

## Patentansprüche

1. Lebensmittelmischer mit einem Übertragungssystem eines Wärmeübertragungsmediums, wie beispielsweise eine Teig-Knetmaschine, wobei der Mischer umfasst:
- ein Gestell (2),
- ein sich um eine Achse drehendes mobiles Behältnis (6) mit einer Innenwand, einer Zwischenwand und einer Außenwand,
- ortsfeste Zuführmittel (48) des Wärmeübertragungsmediums in das Behältnis (6) mit einer Eingangsleitung (49),
- Anschlussmittel (60) zwischen der Eingangsleitung (49) und dem mobilen Behältnis (6), wobei die Anschlussmittel (60) die Dichtheit zwischen den ortsfesten Zuführmitteln (48) und dem Behältnis (6) gewährleisten können,
- Durchlassmittel (34, 41, 42) für die Umwälzung des von durch die Anschlussmittel übertragenen Mediums, wobei die Durchlassmittel (34, 41, 42) einen Eingangskanal in das Behältnis und einen Ausgangskanal aus dem Behälter des Wärmeübertragungsmediums umfassen, wobei die Durchlassmittel (34, 41) die Umwälzung des Mediums zwischen der Innen- und Zwischenwand und des Durchlassmittels (42) ermöglichen, um das Abfließen des Mediums zwischen der Zwischen- und Außenwand zu gestatten,
**dadurch gekennzeichnet, dass** die Anschlussmittel (60) einen am Gestell des Mischers befestigten ortsfesten Teil (68) umfassen, der dicht an den Zuführmitteln (48) montiert ist, und einen koaxialen Teil (67), der anhand von rollenden Körpern (76) dicht und drehbar in Bezug auf den ortsfesten Teil (68) montiert ist, wobei der mobile Teil am mobilen Behältnis (6) befestigt ist.

2. Mischer nach Anspruch 1, **dadurch gekennzeichnet, dass** er dicht am ortsfesten Teil (68) der Anschlussmittel (60) montierte Ableitungsmittel (50) des Wärmeübertragungsmediums umfasst.

3. Mischer nach Anspruch 2, **dadurch gekennzeichnet, dass** die Anschlussmittel (60) eine erste Übertragungsleitung (71) des Mediums gemäß der Achse A umfassen, die das Medium von den Zuführmitteln (48) zu den Durchlassmitteln (41) leitet.

4. Mischer nach Anspruch 3, **dadurch gekennzeichnet, dass** die Anschlussmittel (60) eine zweite Übertragungsleitung (82) des Mediums umfassen, die von der ersten Übertragungsleitung (71) durch eine Wand (74) getrennt ist und koaxial mit der ersten Übertragungsleitung (71) verläuft, wobei die zweite Übertragungsleitung (82) das aus den Durchlassmitteln (42) des Mediums austretende Medium sammelt und es den Ableitungsmitteln (50) zuführt.

5. Mischer nach Anspruch 4, **dadurch gekennzeichnet, dass** die erste Übertragungsleitung (71) einen axialen zylindrischen Kanal und die zweite Übertragungsleitung (82) einen ringförmigen Kanal bildet, wobei der zylindrische Kanal und der ringförmige Kanal durch eine ringförmige Wand getrennt werden, wobei der ringförmige Kanal (82) in eine Kammer (87) mündet, die seitlich über eine Ableitungsöffnung (92) mit den Ableitungsmitteln (50) verbunden ist.

6. Mischer nach Anspruch 5, **dadurch gekennzeichnet, dass** der ortsfeste Teil (68) in Montageposition als ein sich vertikal erstreckender Kollektor (68) ausgebildet ist, mit einem axialen zylindrischen Kanal und einem aus dem oberen Ende des Kollektors (68) heraus ragenden ringförmigen Kanal, und dass der mobile Teil als sich axial erstreckende Drehmuffe (67) ausgebildet, anhand der rollenden Körper (76) mit dem Kollektor (68) verbunden und am unteren Endteil (38) des Behältnisses befestigt ist.

7. Mischer nach Anspruch 6, **dadurch gekennzeichnet, dass** die Anschlussmittel (60) einen Stützring (75a) umfassen, der die Drehmuffe (67) axial und nach unten verlängert und mit einer koaxialen spiralenförmigen Druckfeder (77a) in Kontakt tritt.

8. Mischer nach einem der Ansprüche 6 oder 7, **dadurch gekennzeichnet, dass** die Anschlussmittel (60) Dichtungsmittel (83, 84, 78, 79, 91) zwischen der ersten Übertragungsleitung (71), der zweiten Übertragungsleitung (82), den Durchlassmitteln (40, 41) des Mediums, den Zuführmitteln (48) des Mediums und den Ableitungsmitteln (50) des Mediums umfassen.

9. Mischer nach einem der Ansprüche 2 bis 8, **dadurch gekennzeichnet, dass** das Behältnis (6) von motorisierten Antriebsmitteln (62) des Behältnisses (6) wie Rollen oder Getriebe angetrieben wird, die an dem unteren Endteil (38) des Behältnisses montiert sind, an dem ebenfalls der mobile Teil (67) der Anschlussmittel (60) befestigt ist, und die mit einer auf dem Gestell (2) montierten Antriebswelle (66) montiert sind, wobei die Drehung des Behälters (6) durch eine Kugel- und Rollendrehverbindung (45) geführt ist, wobei die Positionierung des Kollektors (68), der Kugel- und Rollendrehverbindung (45), der Drehmuffe (67) koaxial ist, wobei die Achse die Rotationsachse des Behälters (6) ist.

10. Mischer nach einem der Ansprüche 2 bis 9, **dadurch gekennzeichnet, dass** das Übertragungssystem erste Montagemittel (68a) an das Gestell (2) des Mischers (1) des ortsfesten Teils (68) der Anschlussmittel (60) und zweite Montagemittel des mobilen Teils (67) der Anschlussmittel (60) an den unteren Endteil (38) des Behältnisses (6) umfasst.

11. Mischer nach einem der Ansprüche 2 bis 10, **dadurch gekennzeichnet, dass** die Durchlassmittel (34) einen doppelten Mantel (32, 33) bilden, wobei die mit der Mischung in Kontakt stehende Wand des Behältnisses (6) den ersten Mantel (32) bildet, wobei der zweite Mantel (33) gegebenenfalls eine Schraubenfläche aufweist, um die Umwälzung des Mediums um die Wand des Behältnisses herum zu verbessern.

12. Mischer nach Anspruch 11, **dadurch gekennzeichnet, dass** der zweite Mantel von einem dritten Dämmungsmantel umgeben ist, um die Wärmeaustausche zwischen der Mischung und dem Medium zu konzentrieren.

13. Mischer nach einem der Ansprüche 2 bis 12, **dadurch gekennzeichnet, dass** die Durchlassmittel (34) gegen die Wand des Behältnisses ein Wärme erzeugendes Rohr mit einer etwa ebenen Kontaktfläche bilden, wobei das Rohr durchgehend fest um das Behältnis gewickelt ist.

14. Mischer nach einem der Ansprüche 2 bis 13, **dadurch gekennzeichnet, dass** er erste ortsfeste Führungsmittel (28) umfasst, die mit zweiten mobilen Führungsmitteln (44) zusammenwirken, die an dem unteren Endteil (38) des Behältnisses befestigt sind.

15. Mischer nach einem der Ansprüche 2 bis 14, **dadurch gekennzeichnet, dass** das Wärmeübertragungsmedium ein Kühloder Heizmedium ist.

16. Mischer nach einem der Ansprüche 2 bis 15, **dadurch gekennzeichnet, dass** das Behältnis (6) zylindrisch ist.

17. Mischer nach einem der Ansprüche 2 bis 16, **dadurch gekennzeichnet, dass** die Drehzahl des Behältnisses etwa 5 bis 25 Umdrehungen/Minute beträgt, wobei der Zuführungsdurchsatz des Wärmeübertragungsmediums etwa 8 bis 12 m³/h beträgt.

18. Mischer nach einem der Ansprüche 2 bis 17, **dadurch gekennzeichnet, dass** die Zuführmittel und die Ableitungsmittel starre, an einer Lagervorrichtung des Wärmeübertragungsmediums angeschlossene Stutzen sind.

19. Mischer nach einem der Ansprüche 2 bis 18, **dadurch gekennzeichnet, dass** das Behältnis Bestandteil des Gestells des Mischers ist.

20. Mischer nach einem der Ansprüche 2 bis 18, **dadurch gekennzeichnet, dass** das Behältnis aus dem Gestell des Mischers herausnehmbar ist, in typischer Weise anhand eines Transportschlittens, wobei eine Anschlussvorrichtung den schnellen Anschluss der Zuführungsmittel und der Ableitungsmittel an die Anschlussmittel gewährleistet.

21. Mischer nach einem der Ansprüche 1 bis 20, **dadurch gekennzeichnet, dass** es sich um eine Knetmaschine mit angetriebenem Behälter handelt, wobei die Knetmaschine eine spiralenförmige Knetmaschine, eine Knetmaschine mit Schrägachse, eine Knetmaschine mit Armen ist.

22. Mischanlage, **dadurch gekennzeichnet, dass** sie mindestens einen Mischer nach einem der Ansprüche 1 bis 21 umfasst, wobei die Anlage für ein Dauer- oder Aussetzverfahren, in Reihe oder als Karussell verwendet wird.

## Claims

1. Food mixer comprising a system for transferring a heat-exchange fluid, such as a kneading machine, the mixer comprising:
- a frame (2),
- a container (6) that can move in rotation about an axis and comprises an inner wall, an intermediate wall and an outer wall,
- fixed supply means (48) for supplying the heat-exchange fluid to the container (6), comprising an inlet pipe (49),
- connection means (60) for connecting the inlet pipe (49) and the mobile container (6), the connection means (60) being able to maintain the leaktightness between the fixed supply means (48) and the container (6),
- passage means (34, 41, 42) for circulating the fluid transferred by the connection means, the passage means (34, 41, 42) comprising an inlet channel to the container and an outlet channel from the heat-exchange fluid vessel, the passage means (34, 41) allowing the fluid to circulate between the inner and intermediate walls and the passage means (42) allowing the fluid to be evacuated between the intermediate and outer walls,
**characterized in that** the connection means (60) comprise a fixed part (68) that is fixed to the frame of the mixer and mounted in a leaktight manner on the supply means (48), and a coaxial part (67) that is mounted in a leaktight manner and such that it can move in rotation with respect to the fixed part (68) with the aid of rolling bodies (76), the mobile part being fixed to the mobile container (6).

2. Mixer according to Claim 1, **characterized in that** it comprises evacuation means (50) for evacuating the heat-exchange fluid, which means are mounted leaktightly on the fixed part (68) of the connection means (60).

3. Mixer according to Claim 2, **characterized in that** the connection means (60) comprise a first fluid transfer pipe (71) on the axis A, which takes the fluid from the supply means (48) to the passage means (41).

4. Mixer according to Claim 3, **characterized in that** the connection means (60) comprise a second fluid transfer pipe (82) which is separated from the first transfer pipe (71) by a wall (74) and is coaxial with the first transfer pipe (71), the second transfer pipe (82) collecting the fluid that leaves the fluid passage means (42) and transferring it to the evacuation means (50).

5. Mixer according to Claim 4, **characterized in that** the first transfer pipe (71) forms an axial cylindrical channel and the second transfer pipe (82) forms an annular channel, the cylindrical channel and the annular channel being separated by an annular wall, the annular channel (82) opening into a chamber (87) that is connected laterally by an evacuation orifice (92) to the evacuation means (50).

6. Mixer according to Claim 5, **characterized in that**, in the assembled position, the fixed part (68) is in the form of a collector (68) that extends vertically and comprises an axial cylindrical channel. and an annular channel that projects from the upper end of the collector (68), and the mobile part is in the form of a rotating sleeve (67) that extends axially and is connected by the rolling bodies (76) to the collector (68) and is fixed to the lower end part (38) of the container (6).

7. Mixer according to Claim 6, **characterized in that** the connection means (60) comprise a bearing ring (75a) that extends the rotating sleeve (67) axially and downwards and comes into contact with a coaxial spiral compression spring (77a).

8. Mixer according to either of Claims 6 and 7, **characterized in that** the connection means (60) comprise means for sealing (83, 84, 78, 79, 91) between the first transfer pipe (71), the second transfer pipe (82), the fluid passage means (40, 41), the fluid supply means (48) and the fluid evacuation means (50).

9. Mixer according to any one of Claims 2 to 8, **characterized in that** the container (6) is driven in rotation by drive means (62) for the container (6), of the pulley or gear type, which drive means are mounted on the lower end part (38) of the container on which there is also fixed the mobile part (67) of the connection means (60) and are connected to a motor drive shaft (66) mounted on the frame (2), the vessel (6) being guided in rotation by an orientation annulus (45), the position of the collector (68), of the orientation annulus (45) and of the rotating sleeve (67) being coaxial, the axis being the axis of rotation of the vessel (6).

10. Mixer according to any one of Claims 2 to 9, **characterized in that** the transfer system comprises first mounting means (68a) for mounting the fixed part (68) of the connection means (60) to the frame (2) of the mixer (1), and second mounting means for mounting the mobile part (67) of the connection means (60) to the lower end part (38) of the container (6).

11. Mixer according to any one of Claims 2 to 10, **characterized in that** the passage means (34) form a double envelope (32, 33), the wall of the container (6) in contact with the mix forming the first envelope (32) and the second envelope (33) where necessary having a helicoid in order to improve the circulation of the fluid around the wall of the container.

12. Mixer according to Claim 11, **characterized in that** a third insulating envelope covers the second envelope so as to concentrate the exchanges of heat between the mix and the fluid.

13. Mixer according to any one of Claims 2 to 12, **characterized in that** the passage means (34) form a heat-generating tube that has an essentially flat contact surface against the wall of the container, the tube being wound around and held against the container in a continuous manner.

14. Mixer according to any one of Claims 2 to 13, **characterized in that** it comprises fixed first guide means (28) that cooperate with mobile second guide means (44) that are fixed to the lower end part (38) of the container.

15. Mixer according to any one of Claims 2 to 14, **characterized in that** the heat-exchange fluid is a cooling fluid or heating fluid.

16. Mixer according to any one of Claims 2 to 15, **characterized in that** the container (6) is cylindrical.

17. Mixer according to any one of Claims 2 to 16, **characterized in that** the speed of rotation of the container is around 5 to 25 rpm, and the flow rate with which the heat-exchange fluid is supplied is around 8 to 12 m³/h.

18. Mixer according to any one of Claims 2 to 17, **characterized in that** the supply means and the evacuation means are rigid pipes that are connected to a storage device for the heat-exchange fluid.

19. Mixer according to any one of Claims 2 to 18, **characterized in that** the container is secured to the frame of the mixer.

20. Mixer according to any one of Claims 2 to 18, **characterized in that** the container can be extracted from the frame of the mixer, typically using a transport carriage, a connection device providing the rapid connection of the supply means and evacuation means to the connection means.

21. Mixer according to any one of Claims 1 to 20, **characterized in that** it is of the driven vessel kneading machine type, the kneading machine being a spiral kneading machine, an oblique-axis kneading machine or a kneading machine having arms.

22. Mixing installation, **characterized in that** it comprises at least one mixer according to any one of Claims 1 to 21, the installation being used for a continuous or batch process, on a line or on a carousel.
